# EUROPÄISCHE PATENTANMELDUNG

(11) **EP 2 565 507 A1**
(43) Veröffentlichungstag der Anmeldung: **06.03.2013**
(21) Anmeldenummer: 12182322.3
(22) Anmeldetag: 30.08.2012
(51) Int. Cl.: F16L 19/02

(54) **Fitting**

(30) Priorität: 01.09.2011 DE 202011105649 U
(71) Anmelder: GEMÜ Gebrüder Müller Apparatebau GmbH & Co. KG, 74653 Ingelfingen (DE)
(72) Erfinder: Müller, Fritz, 74653 Ingelfingen-Criesbach (DE); Oettinger, Nicole, 74635 Kupferzell (DE); Wolpert, Kai-Uwe, 74238 Krautheim (DE); Mayer, Peter, 74523 Schwäbisch Hall (DE)
(74) Vertreter: Dreiss

(57) **Zusammenfassung**

Die Erfindung betrifft ein Fitting (16) mit Schraubring (18) zum Anschrauben des Fittings (16) z.B. an einen Ventilstutzen (14), mit einer Umfangsnut (28), wenigstens zwei in die Umfangsnut (28) radial einsetzbare Bogenstücke (26), welche die Umfangsnut (28) radial nach außen überragen, wobei der Schraubring (18) einen radial nach innen vorstehenden Bund (24) aufweist, der sich an die in die Umfangsnut (28) eingelegten Bogenstücke (26) anlegt und dadurch die Zugkraft des Schraubrings (18) auf den Fitting (16) überträgt, wobei der Schraubring (18) frei um die Bogenstücke (26) drehbar ist.

## Beschreibung

Die Erfindung betrifft einen Fitting mit Schraubring zum Anschrauben des Fittings z.B. an einen Ventilstutzen, mit einer Umfangsnut, wenigstens zwei in die Umfangsnut radial einsetzbare Bogenstücke, welche die Umfangsnut radial nach außen überragen, wobei der Schraubring einen radial nach innen vorstehenden Bund aufweist, der sich an die in die Umfangsnut eingelegten Bogenstücke anlegt und dadurch die Zugkraft des Schraubrings auf den Fitting überträgt.

Fittings mit Schraubring, beispielsweise zum Anschluss an einen Ventilstutzen, bieten dann kein Montageproblem, wenn der Fitting als gerader Fitting ausgebildet ist oder nur eine leichte Krümmung aufweist, so dass er durch den Schraubring hindurch gesteckt werden kann, bevor man den Fitting befestigt. Soll ein Schraubring jedoch drehbar aber nicht abziehbar an einem Fitting montiert werden, der sich im weiteren Verlauf beispielsweise erweitert oder als 90°-Bogen ausgebildet ist, so lässt sich der Schraubring nicht "von hinten" montieren. Man ist dann auf einen Fitting der einleitend bezeichneten Art angewiesen, dessen Schraubring "von vorn" montiert wird.

Bei einem bekannten Anschluss (DE 84 20 176 U1) besteht der Schraubring aus zwei miteinander verschraubbaren Teilringen, wobei die Montage so erfolgt, dass zunächst der erste Teilring von vorn über den Anschlussstutzen gesteckt wird, dann die Bogenstücke eingelegt werden und schließlich der zweite Teilring aufgesteckt und mit dem ersten Teilring verschraubt wird, wobei die beiden Teilringe die Bogenstücke zwischen sich einklemmen.

Aus der EP 0 214 777 A1 ist ein Anschluss bekannt, bei welcher auf das Ende des Fittings eine Hülse mit Außengewinde aufgeschoben und dann in eine Umfangsnut des Fittings zwei Bogenstücke eingesetzt werden, die ein Abziehen der Hülse verhindern. Auf die Hülse kann dann ein Schraubring aufgeschraubt werden. Dieser bekannte Anschluss ist jedoch wegen der Zweiteiligkeit des Schraubrings aufwändig in der Herstellung und schwierig zu montieren.

Die DE 35 36 286 A1 zeigt einen Rohranschluss mit Schraubring für ein Gehäuse mit angeformtem Anschlussstutzen, bei dem in eine Umfangsnut Bogenstücke eingelegt sind, welche radial überstehen und an einem nach innen vorstehenden Bund des Schraubrings anliegen. Dabei sind Bogenstücke mit einem Außengewinde versehen und der Schraubring weist ein mit diesem zusammenpassendes Innengewinde auf. Wenigstens ein Bogenstück ist mittels eines auf Bruch ausgelegten Zapfens so lange an einer Drehung um den Anschlussstutzen gehindert, bis im Verlauf der gegenseitigen Verschraubung der Schraubringbund an den Bogenstücken zur Anlage kommt und der Zapfen abgeschert wird. Durch die Verschraubung des Schraubringes mit den Bogenstücken und der Festlegung der Bogenstücke am Rohranschluss, kann der Rohranschluss keine beliebige Winkellage einnehmen. Als nachteilig wird angesehen, dass diese Lösung für gebogene Fittings nicht verwendet werden kann, da der Fitting in jeder Richtung vom Stutzen abragen soll.

Der Erfindung liegt die Aufgabe zugrunde, einen Fitting bereit zu stellen, der diese Nachteile nicht aufweist.

Diese Aufgabe wird mit einem Fitting der eingangs genannten Art erfindungsgemäß dadurch gelöst, dass der Schraubring frei um die Bogenstücke drehbar ist.

Der erfindungsgemäße Fitting weist somit den Vorteil auf, dass der Schraubring von vorne montiert und dass der Fitting in jeder beliebigen Winkellage am Ventilstutzen befestigt werden kann. Die Erfindung kann nicht nur an gebogenen sondern an jedem beliebigen Fitting verwirklicht werden, auch bei Fittings, bei denen der Schraubring hintan aufschiebbar ist. Wird z.B. bei der Montage des Fittings am Ende einer Rohrleitung vergessen, den Schraubring vorher aufzuschieben, so kann dies nunmehr noch nachträglich erfolgen, da er von vorne montiert werden kann. Die Fittings können gänzlich ohne Schraubring in den Handel kommen, so dass sie mit jedem gewünschten Schraubring bestückt werden können, z.B. mit Schraubringen für Gabelschlüssel oder Hakenschlüssel oder für die Handmontage.

Eine einfache Herstellung und Lagerhaltung für die Bogenstücke wird dadurch erreicht, dass sie gleich ausgebildet sind. Es bedarf dann lediglich Bogenstücke unterschiedlicher Durchmesser, d.h. für Fittings mit unterschiedlichen Durchmessern.

Um eine optimale Verankerung der Bogenstücke in der Umfangsnut zu erreichen, sind die Bogenstücke an ihren aneinander anliegenden Stirnseiten formschlüssig miteinender verbunden, insbesondere sind sie miteinander verzapft.

Eine einfache Herstellung und insbesondere ein einfaches Entformen aus den Spritzgusswerkzeugen wird dadurch erreicht, dass die Bogenstücke eine glatte Außenoberfläche aufweisen.

Dadurch gekennzeichnet, dass die Bogenstücke in Umfangsrichtung drehbar in der Umfangsnut gelagert sind, wird erreicht, dass sich der Schraubring leichter am Fitting drehen lässt.

Bei einem bevorzugten Ausführungsbeispiel bestehen die Bogenstücke aus Kunststoff. Insbesondere bestehen die Bogenstücke aus dem gleichen Material wie der Fitting.

Eine besondere Variante der Erfindung sieht vor, dass die Bogenstücke einteilig, insbesondre zusammen mit dem Fitting gespritzt sind und vor Gebrauch gebrochen werden.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im einzelnen beschrieben ist. Dabei können die in der Zeichnung dargestellten und in der Beschreibung sowie in den Ansprüchen erwähnten Merkmale jeweils einzeln für sich oder in beliebiger Kombination erfindungswesentlich sein.

In der Zeichnung zeigen:

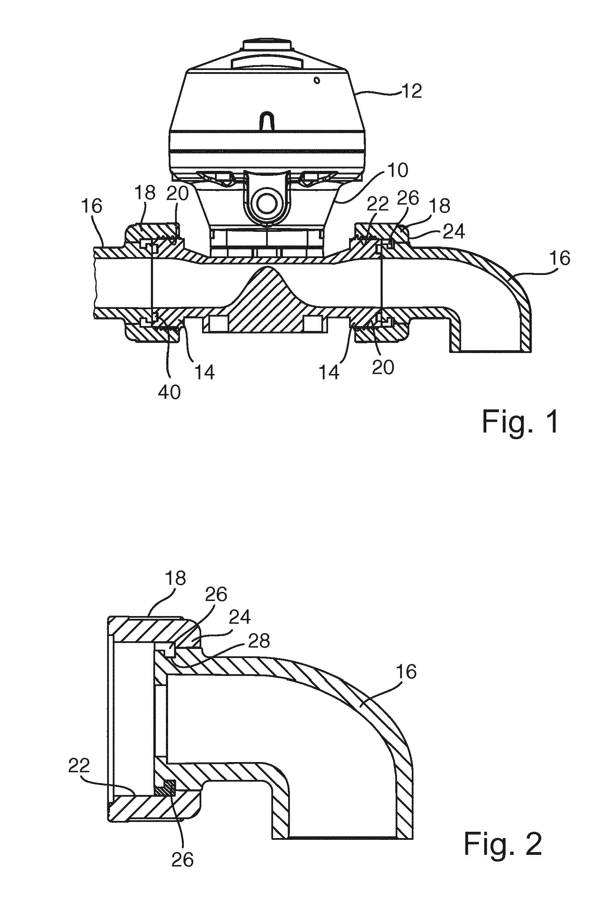

- Figur 1: einen Längsschnitt eines an ein Ventil angeschraubten Fittings,
- Figur 2: einen Längsschnitt durch den Fitting,
- Figur 3: eine Seitenansicht auf ein Bogenstück; und
- Figur 4: eine Draufsicht auf das Bogenstück.

Die Zeichnung zeigt ein insgesamt mit 10 bezeichnetes Ventil mit einem Antrieb 12, wobei an den Ventilstutzen 14 jeweils ein Fitting 16 angeschraubt ist. Hierfür wird ein Schraubring 18 verwendet, der auf ein Außengewinde 20 am Ventilstutzen 14 aufgeschraubt ist. Hierfür weist der Schraubring 18 an seinem dem Ventilstutzen 14 zugewandten Ende ein Innengewinde 22 und zur Befestigung am Fitting 16 einen radial nach innen vorstehenden Bund 24 auf. Dieser Bund 24 hintergreift zwei halbkreisförmige Bogenstücken 26, die in einer Umfangsnut 28 am Fitting 16 gelagert sind. Die beiden Bogenstücke 26 besitzen einen L-förmigen Querschnitt, wobei sie mit ihrem einen Schenkel 30 in die Umfangsnut 28 eingreifen und mit ihrem anderen Schenkel 32 den Außenumfang des Fittings 16 überragen. Dieser Schenkel 32 wird vom Bund 24 hintergriffen. Der Schenkel 32 weist eine radial nach außen gerichtete Oberfläche auf, die sich mit dem Innengewinde 22 des Schraubringes 18 formschlüssig nicht verbindet. Dies bedeutet, dass der Schraubring 18 ohne Eingriff in die Bogenstücke 26 gedreht werden kann. Dies hat wiederum zur Folge, dass beim Anschrauben des Schraubringes 18 an den Ventilstutzen 14 der Fitting 16 in jede Winkellage drehen lässt. Eine Abdichtung zwischen Fitting 16 und Ventil 10 wird dadurch erzielt, dass die Stirnseite des Ventilstutzens 14 mit einer umlaufenden Nut versehen ist, in welche eine Dichtung, insbesondere ein O-Ring 40 eingelegt ist. An diesem O-Ring 40 liegt die Stirnseite des Fittings 16 an.

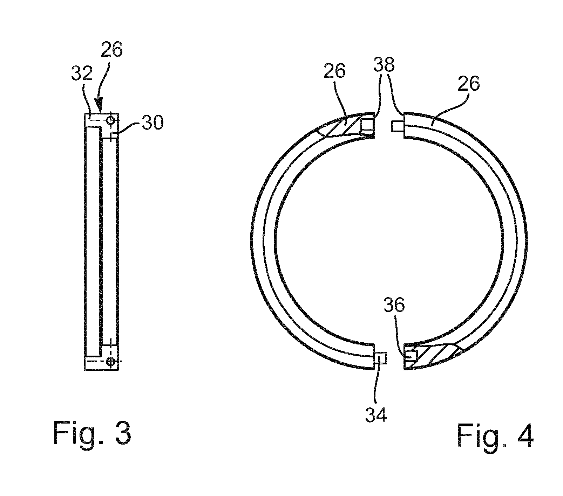

Aus Figur 4 ist erkennbar, dass die einander zugewandten Stirnseiten 38 der Bogenstücke 26 Zapfen 34 und Vertiefungen 36, insbesondere Sacklöcher, aufweisen, so dass die beiden Bogenstücke 26 formschlüssig miteinander verbunden werden können. Außerdem ist erkennbar, dass die beiden Bogenstücke 26 gleich ausgebildet sind.

Die Montage des Schraubrings 18 verläuft wie folgt: Er wird zunächst soweit über den Fitting 16 geschoben, bis die Umfangsnut 28 desselben wieder zugänglich ist. Nun werden die beiden Bogenstücke 26 um den Fitting 16 herum zusammengefügt und dabei in die Umfangsnut 28 eingeführt. Nun wird der Schraubring 18 mit dem Ventilstutzen 14 verschraubt, bis schließlich sein Bund 24 am Schenkel 32 der Bogenstücke 26 zur Anlage kommt. Der Fitting 16 ist am Ventilstutzen 14 zwar drehbar aber nicht axial verschiebbar, und kann in die gewünschte Winkellage ausgerichtet werden.

## Patentansprüche

1. Fitting (16) mit Schraubring (18) zum Anschrauben des Fittings (16) z.B. an einen Ventilstutzen (14), mit einer Umfangsnut (28), wenigstens zwei in die Umfangsnut (28) radial einsetzbare Bogenstücke (26), welche die Umfangsnut (28) radial nach außen überragen, wobei der Schraubring (18) einen radial nach innen vorstehenden Bund (24) aufweist, der sich an die in die Umfangsnut (28) eingelegten Bogenstücke (26) anlegt und dadurch die Zugkraft des Schraubrings (18) auf den Fitting (16) überträgt, **dadurch gekennzeichnet, dass** der Schraubring (18) frei um die Bogenstücke (26) drehbar ist.

2. Fitting nach Anspruch 1, **dadurch gekennzeichnet, dass** die Bogenstücke (26) gleich ausgebildet sind.

3. Fitting nach einem der vorhergehenden Ansprüche, **dadurch gekennzeichnet, dass** die Bogenstücke (26) an ihren aneinander anliegenden Stirnseiten (38) formschlüssig miteinender verbunden sind.

4. Fitting nach Anspruch 3, **dadurch gekennzeichnet, dass** die Bogenstücke (26) an ihren aneinander anliegenden Stirnseiten (38) miteinander verzapft sind.

5. Fitting nach einem der vorhergehenden Ansprüche, **dadurch gekennzeichnet, dass** die Bogenstücke (26) eine glatte Außenoberfläche aufweisen.

6. Fitting nach einem der vorhergehenden Ansprüche, **dadurch gekennzeichnet, dass** die Bogenstücke (26) in Umfangsrichtung drehbar in der Umfangsnut (28) gelagert sind.

7. Fitting nach einem der vorhergehenden Ansprüche, **dadurch gekennzeichnet, dass** die Bogenstücke (26) aus Kunststoff bestehen.

8. Fitting nach Anspruch 7, **dadurch gekennzeichnet, dass** die Bogenstücke (26) einteilig gespritzt sind und vor Gebrauch gebrochen werden.
